Europäisches Patentamt

European Patent Office

Office européen des brevets

(19)

(11) Publication number: **0 195 538**
**A2**

(12) **EUROPEAN PATENT APPLICATION**

(21) Application number: **86301352.0**

(22) Date of filing: **26.02.86**

(51) Int. Cl.⁴: **B 60 G 11/10**
**B 60 G 11/08**

(30) Priority: **21.03.85 US 714526**

(43) Date of publication of application:
**24.09.86 Bulletin 86/39**

(84) Designated Contracting States:
**DE IT**

(71) Applicant: **GENERAL MOTORS CORPORATION**
**General Motors Building 3044 West Grand Boulevard**
**Detroit Michigan 48202(US)**

(72) Inventor: **Lundin, Donald George**
**31163 Lund Drive**
**Warren Michigan 48093(US)**

(72) Inventor: **Knable, Joseph James**
**6387 Denton Hill**
**Fenton Michigan 48430(US)**

(74) Representative: **Breakwell, John Neil Bower et al,**
**GM Patent Section Luton Office (F6) P.O. Box No. 3**
**Kimpton Road**
**Luton Beds. LU2 0SY(GB)**

(54) **Vehicle wheel suspension.**

(57) A vehicle wheel suspension of the type including a transversely extending leaf spring (20) is adapted to effect adjustment of the vehicle sprung mass or chassis to a desired height or level attitude by manipulation of a spring connector assembly (66, 74) effective to raise or lower the outboard end of the spring independently of alteration of the wheel guidance structure (20, 22) of the suspension.

Fig.1

EP 0 195 538 A2

VEHICLE WHEEL SUSPENSION

This invention relates to a vehicle wheel suspension.

The invention is particularly concerned with a vehicle height and attitude-adjusting suspension spring arrangement in an automotive suspension of the type employing a transverse leaf spring between the sprung and unsprung masses of the vehicle. In this and in other particular types of springs used in automotive suspensions, as is well known, the design of the suspension always includes selection of the spring shape and dimensions in the unloaded condition as well as its rate of deflection under load, all to properly accomplish, inter alia, a suitable level attitude for the finally assembled vehicle. Since various vehicle weights occur even in a specific vehicle model, due to various combinations of accessories, it is often necessary to design a plurality of different selections of springs, each for a different range of vehicle weight, whereby additional assembly plant inventory and part manufacturing costs, for example, are required.

Specifically, the present invention is directed to the provision of a vehicle wheel suspension permitting adjustment of the vehicle body height without appreciably altering the suspension geometry.

To this end, a vehicle wheel suspension in accordance with the present invention is characterised by the features specified in the characterising portion of claim 1.

Thereby, the invention makes available a height-adjustable suspension spring arrangement wherein the number of various selections of springs can be substantially reduced in the assembly plant inventory but proper vehicle height and trim can still be obtained.

The invention makes use of a height-adjusting connector assembly which, in the case of a vehicle suspension employing a transverse leaf spring, can be conveniently associated with the outboard end of the transverse leaf spring for connection thereof to the unsprung mass or wheel assembly of the vehicle upon which the spring end applies the sprung vehicle load.

In its broader aspects, the invention may be employed in a variety of connecting arrangements between such spring ends and the unsprung mass, or indeed be applied other than purely in a transverse-spring configuration of suspension.

However, in a preferred embodiment, the invention has particular utility in a suspension arrangement wherein a wheel support member is guided by a lower lateral control arm or arms co-acting with a conventional hydraulic shock absorber strut or other upper guidance structure. A transverse leaf spring is applied in such arrangement as a separate load-bearing member only, preferably formed of a composite material such as fibre glass-reinforced polyester resin or the like, such materials, in contrast to steel, not being suited to the shaping therein of an integral end connection or eye.

The prior art does include height-adjusting suspension arrangements for coil springs such as those disclosed in US-A-3 781 033 and US-A-3 717 354, and correspondingly for leaf springs as disclosed in US-A-2 123 089, wherein a transverse leaf spring is described as being installed between the vehicle sprung mass and the wheel and functions not only as the primary elastic medium but also as a guiding lateral control arm. According to the disclosure of the said US-A-2 123 089, an eccentric screw is employed to vary the wheel camber setting in relation to the lateral control arm linkage, in what has become a well-known manner.

The present invention is concerned with the provision of a suspension arrangement improved over such prior art wherein proper vehicle height and trim are established in the assembly plant or thereafter by simple and economical means which are independent of and will not appreciably disturb the wheel alignment settings otherwise obtained in the suspension apparatus. The vehicle suspension spring is adjusted for vehicle height and trim completely independently of any alteration of the connection between the lateral control arm and the wheel support member.

Furthermore, the invention avoids the need for the use of shims, which is so often objectionable in the assembly plant and elsewhere.

In the context of suspension systems employing leaf springs of fibre glass-reinforced polymeric resin or like material, the present invention makes available a simple and inexpensive expedient for the interconnection of such a spring within a height-adjusting connector assembly in a manner effective to avoid complex shapes of the spring end or highly localized stress conditions therein.

In the drawings:

Figure 1 is a fragmentary, partially broken away perspective view of a preferred embodiment of a vehicle wheel suspension in accordance with the present invention;

Figure 2 is an enlarged fragmentary elevational view generally from the plane indicated by the line 2--2 of Figure 1, in the direction of the arrows;

Figure 3 is a fragmentary elevational view, partially in section, generally from the plane indicated by the line 3--3 of Figure 2, in the direction of the arrows, showing a median position for a height-adjusting connector assembly of the suspension;

Figure 4 is a view similar to Figure 3 but showing alternative extreme adjustment conditions, in broken and solid lines respectively; and

Figure 5 is a fragmentary sectional view generally from the plane indicated by the lines 5--5 of Figure 2, in the direction of the arrows.

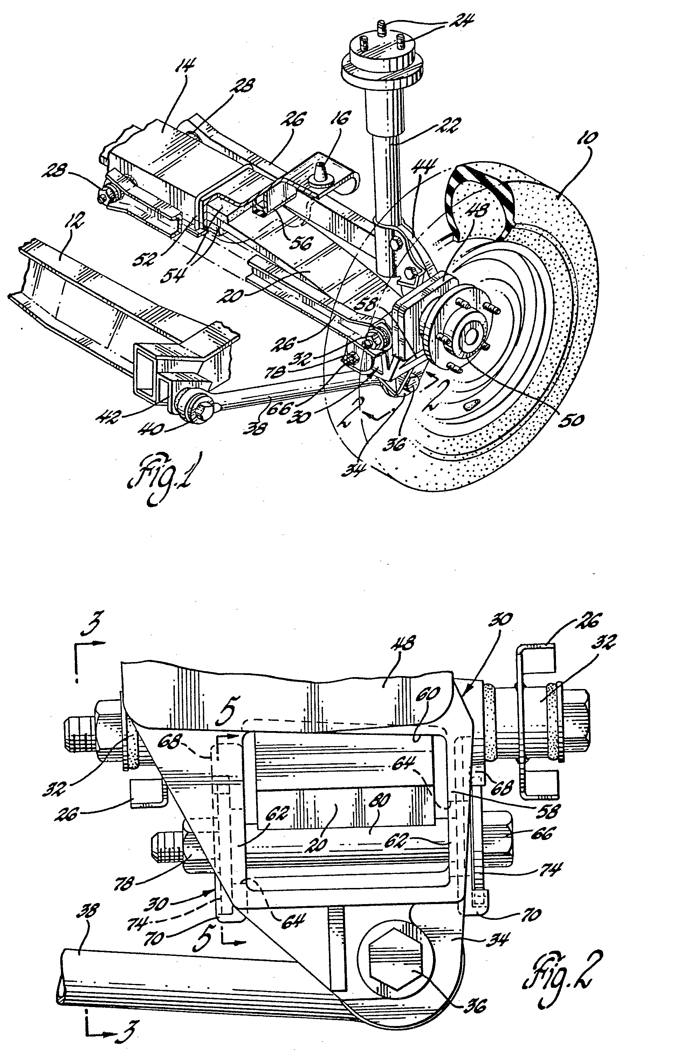

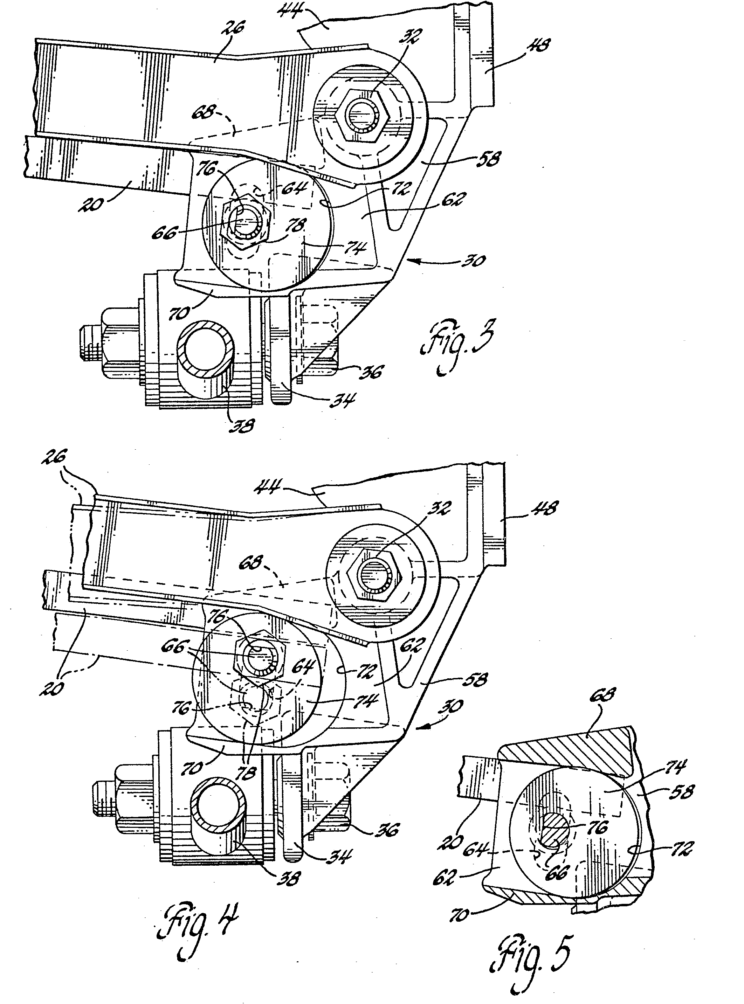

With reference now particularly to Figure 1 of the drawings, there is illustrated in fragmentary fashion a vehicle wheel suspension in accordance with the present invention for a road wheel assembly 10 located at one side of the vehicle, and for illustrative purposes only at the rear end thereof. In the specific embodiment discussed hereinafter for this one wheel, a mirror-image complementary suspension structure exists at the opposite side of the vehicle for the opposite road wheel; however, the invention is not to be limited to such a total suspension arrangement, in that the principles apply equally to suspension arrangements wherein a single leaf spring suspension element serves only a respective road wheel.

The chassis and body of the vehicle are represented in the drawings by structural units thereof including a cross-member 12, which may be welded or otherwise rigidly unitary within the chassis, and a further suspension module cross-member 14 having kick-up end portions, one of which is shown, and including suitable fastener attachments as at 16 to enable modular sub-assembly of the vehicle suspension and subsequent joining thereof to the main vehicle chassis. Such cross-member 14 is of generally uniform channel section from end to end, to house therewithin the primary suspension leaf spring 20. Such spring is adapted to bear the vehicle sprung mass 12,14 upon the unsprung mass including the wheel assembly 10 and its counterpart at the opposite side of the vehicle.

In the specific embodiment disclosed, the vehicle suspension includes a MacPherson-type wheel guidance arrangement including a shock absorber strut 22 of well-known character embodying telescopic portions housing a hydraulic damper therewithin and, at the upper such telescopic portion, suitable fasteners 24 for securing the same to an elevated chassis portion of the vehicle sprung mass, not shown. A pair of lateral control arms 26 of generally identical shallow-channel configuration extend from proximate the longitudinal centre line of the vehicle and alongside the transversely extending cross-member 14, and are pivotally joined thereto by suitable conventional rubber-bushed pivot joints 28 adjacent such longitudinal centre line. The control arms 26 extend substantially transversely to a like pivotal connection at their respective outboard ends with respective rubber-bushed pivot joints 32 of a wheel support knuckle 30 upon which the wheel 10 is rotatably mounted in conventional fashion, the pivot joints being shown in more detail in Figure 2. As is also seen therein, the wheel support knuckle 30 includes a lower extension 34 securing by way of a further pivot joint 36 similar to the pivot joint 32 the distal end of a trailing link formed by a radius rod 38. Such rod is secured by another such rubber-bushed pivot joint 40 and suitable bracketry 42 to the chassis cross-member 12.

Thus the illustrated suspension is of the so-called "tri-link" type, involving a combination of one longitudinal and two lateral control links at the lower portions of the vehicle chassis to co-act with the shock absorber strut 22 for wheel and wheel support guidance during relative ride motions of the sprung and unsprung masses during vehicle operation. The co-action of the shock absorber strut 22 is accomplished by rigid securement of the lower end thereof to an upper extension 44 of the wheel support knuckle 30, as by the use of a conventional saddle-type bracket welded to the lower telescopic portion of the strut and affixed at its flanges by bolts to the knuckle 30. The knuckle 30 further includes the usual wheel hub and brake apparatus mounting plate 48 carrying the wheel hub assembly 50 by conventional means.

The suspension spring 20 serves as the primary resilient medium supporting the sprung mass on, in this illustrated embodiment, a suitable supporting surface directly within the knuckle 30, and acts as the spring medium independently of any function of lateral guidance such as that provided by the control arms 26. The spring 20 is secured at its inboard region to the cross-member 14 by way of a pair of separate U-bolt and bracket fasteners 52, one of which is shown, suitably separated from each other, on either side of the longitudinal centre line, to obtain resilient reaction not only to relative ride motions of the sprung and unsprung masses but also to opposite wheel deflections as occur under centrifugal force during cornering.

Suitable polymeric mounting blocks, indicated at 54, capture the suspension spring 20 within the cross-member 14 under the clamping force of the fasteners 52. It is contemplated that the spring 20 may advantageously be of a composite structure of fibre glass-reinforced polyester or like polymeric resin providing very high modulus characteristics and relatively light weight. The mounting blocks 54 are structured to avoid degradation of the spring as by abrasion and the entry of foreign material from the road.

Opposite jounce bumpers, one of which is indicated at 56, are installed on the underside of the cross-member 14 to engage the upper surface of the spring 20 during extreme upward deflection of the road wheel assembly 10.

With reference now to Figures 2 and 3, the outboard (distal) end of the spring 20 is received in a special cavity of the knuckle 30 formed within a medial portion 58 thereof. Such medial portion is cast or forged with an opening as at 60 receiving within the outlines thereof the end of the spring 20. The medial knuckle portion 58 comprises a longitudinally spaced pair of laterally extending walls partially defining such opening, such walls being indicated at 62. The walls contain aligned opposing slots indicated at 64 which receive the shank portion of a height-adjusting bolt 66. The outward surface of each wall 62, to which the slot 64 opens, as is best seen in Figure 3 and in Figure 5, is structured with recesses formed by extended ledges 68 and 70 merging with a partially semi-circular surface relief 72.

The bolt 66 has attached to the shank thereof at opposite ends thereof a pair of circular cam washers 74 received within the recesses of the walls 62 and rotatable therewithin. One cam washer 74 is unitarily formed or welded to the head of the bolt 66, and the opposite cam washer 74 may have a flattened aperture 76 for unitary rotation therewith when assembled to the similarly flattened end thereof by a nut 78, as seen in Figures 2 and 5. The washers 74 are of a diameter substantially matching the vertical distance (diameter) across the recesses 72, and they are fixedly mounted on the bolt 66 with identical eccentricity thereto.

As is best seen in Figure 3, the distal (outboard) end of the spring 20 bears directly upon the shank 80 of the bolt 66 serving as the support surface aforementioned. With the eccentric cam washers 74 rotated to the position shown, the bolt shank 80 occupies a median height-adjustment position for the spring 20 midway the length of the slot 64. The sprung mass may be raised or lowered in a continuous manner and in very fine increments by rotation of the bolt 66 after loosening of the nut 78.

Thus, due to the eccentricity of the cam washers 74, the bolt shank may be translated vertically in the slots 64 while the washers 74 nutate laterally, to any of a variety of height-adjusting conditions between fully raised and fully lowered conditions as indicated in solid and broken lines respectively for the spring 20 in Figure 4. In turn, raising or lowering of the end of the spring 20 relative to the knuckle 30 raises or lowers the vehicle sprung mass relative thereto. Similar adjustment at the opposite road wheel 10 will provide

0195538

a suitable trim (attitude) and height for the vehicle if the spring 20 is in the proper rate range for the specific vehicle weight. Many fewer selections of spring rate ranges need thus be stocked for a vehicle model, and the invention thereby makes available a height-adjusting means which is obviously much preferable to shims.

Once established, the height setting is secured by tightening of a nut 78.

Thus in the specific embodiment described, rotation of the bolt 66 and the associated cam washer 74 provides pure lifting (or lowering) of the vehicle body with respect to the wheels without altering the connections 32 of the control arms 26, and the present invention thereby provides a convenient, simple and effective height-adjusting suspension arrangement for leaf spring suspensions wherein vehicle height and trim may be adjusted without any appreciable disturbance of camber, toe-in or other alignment parameters of the vehicle wheel guidance assemblies including the control arms 26.

The connector assembly including the bolt 66 is thus independent of such control arms and whatever attachments are employed thereon to set the wheel alignment.

Similar benefits accrue where the leaf spring is employed (within the scope of the claims) in other than a transverse orientation within the vehicle, the connector assembly including the bolt 66, however, still being applied to the distal end of such spring. The distal end of the spring may alternatively connect with other parts of the unsprung mass, such as on a control arm 26 rather than on the knuckle 30, with the principles of the invention still applying.

Claims:

1. A vehicle wheel suspension characterised by a wheel support member (30), laterally extending control arm means (26) swingably mounted by inboard pivot means (28) thereof on the vehicle sprung mass (12,14) and connected by outboard pivot means (32) thereof to the wheel support member (30) to constitute therewith an unsprung mass, height-adjustable suspension spring means comprising a leaf spring (20) secured to the vehicle sprung mass (12,14) and extending for connection at its distal end to the unsprung mass, and a sprung mass height-adjusting connector assembly interconnecting the distal end of the leaf spring (20) and the unsprung mass independently of the outboard pivot means (32) and including means (66,74) mounted for selective positional adjustment in fine increments with respect to the leaf spring distal end or the unsprung mass to vary the vertical relation therebetween.

2. A vehicle wheel suspension according to claim 1, characterised in that the leaf spring (20) comprises a transverse leaf spring secured at an inboard region thereof to the vehicle sprung mass (12,14) and extending for connection at its outboard end to the wheel support member (30), the sprung mass height-adjusting connector assembly interconnects the outboard end of the leaf spring (20) and the wheel support member (30) independently of the outboard pivot means (32), and the connector assembly includes bolt means (66) mounted for selective rotation in the leaf spring outboard end or the wheel support member (30) and operative upon such rotation to carry the outboard end of the leaf spring in a path effective to vary the vertical relation therebetween.

3. A vehicle wheel suspension according to claim 2, characterised in that the transverse leaf spring (20) is made of polymeric material, and the sprung mass height-adjusting means comprises a cam bolt (66) rotatably mounted in the wheel support member (30) and including a spring support portion (80) oriented longitudinally of the vehicle sprung mass (12,14), with the bottom surface of the outboard end of the leaf spring (20) bearing upon the support portion (80), whereby selective rotation of the cam bolt (66) relative to the wheel support member (30) varies the vertical relation thereto of the outboard end of the leaf spring (20).

*Fig.1*

*Fig.2*

*Fig. 3*

*Fig. 4*

*Fig. 5*